# EUROPEAN PATENT SPECIFICATION

(11) **EP 0 366 425 B1**
(45) Date of publication and mention of the grant of the patent: **30.03.1994**
(21) Application number: 89310970.2
(22) Date of filing: 24.10.1989
(51) Int. Cl.: G03G 15/00, G03D 15/00, G06F 3/12

(54) **Job processing system for use with document copying/printing machines**
System zur Abwicklung von Kopier- bzw. Druckaufträgen
Système de déroulement d'une commande pour machines à copier/imprimer des documents

(30) Priority: 24.10.1988 US 261806
(43) Date of publication of application: 02.05.1990
(73) Proprietor: XEROX CORPORATION, Rochester New York 14644 (US)
(72) Inventor: Rourke, John L., Fairport New York 14450 (US)
(74) Representative: Johnson, Reginald George

(56) References cited:
- US-A- 4 588 282
- US-A- 4 733 275
- US-A- 4 758 952

## Description

The invention relates to a system for processing document reproducing jobs.

High speed electronic copying and printing machines convert original images into image signals or pixels, and in that form process the image signals to provide the desired output which typically is in the form of copies or prints. Machines of this type naturally are and indeed are expected to be highly automated to speed up job production and reduce operator time and involvement to the barest minimum.

Because of their high capacity, speed, and versatility, these machines are particularly suitable for use in central facilities or sites such as commercial printing establishments, in-plant copying and printing departments, etc. These applications typically queue jobs through all stages of the work process and utilize tools such as 'job tickets' to direct the work flow. These 'tickets' provide the direction to operators of the equipment to act on the hard documents being readied for production, the instructions serving as programming parameters to transform the original concepts (galleys/graphics/pictures, etc.) from separate entities and crude beginnings into integrated structures that are then ready for printing onto hard paper, etc.

To allow the operator to efficiently manage jobs by performing tasks in efficient clumps, it is desirable to program ahead several jobs at once. That is, the operator/shop will try and queue operations so that incoming jobs will be stacked prior to programming following which the individual stacks are programmed. Once the jobs are programmed, the operator can then place the job in the input hopper for processing.

In the prior art, U.S. Patents Nos. 4,716,438 to Farrell and 4,757,348 to Rourke et al disclose the use of job and page separators to program high speed copying and printing machines in which the separators, which are designed to be added to and scanned with the document originals being processed, bear job programming information in the form of a bar code. The job and page separators are scanned by the machine document scanner, distinguished from the document originals and the bar code read to provide control instructions for operating the machine.

The use of control sheets inserted at selected points in the document stack to segregate and distinguish different jobs from one another is also suggested by U.S. Patent No. 4,248,528 to Sahay et al. In that prior art patent, however, a separate reader is employed to read and decipher the control data on the control sheet, adding to the complexity and expense of the machine. There, the reader must be positioned at a point above the document stack in order to view the separator sheets, a position which can interfere with access to the document supply tray and which in some cases can limit the maximum number of documents that can be placed in the document supply tray.

In contrast to the prior art, the present invention provides a method for processing document reproducing jobs, including preparing instructions in the form of a hard copy for a document reproducing job, said instructions including a job identification where said job identification is encoded in machine readable form, combining said hard copy with the documents that comprise said document reproducing job; scanning said hard copy to identify the job using said job identification, accessing said instructions in electronic form for said document reproducing job, and reproducing said documents in accordance with the accessed instructions, characterised in that said method utilises a network printing system of the type including an input station disposed at a first location and at least one printing apparatus disposed at a second location wherein both the input station and the printer communicate with a job bank memory, whereby said instructions are prepared in electronic form with the input station and stored in electronic form in the job bank memory, the hard copy being produced from said instructions with said input station, said hard copy being scanned with said printing apparatus to identify the job, said instructions being accessed in electronic form from the job bank memory and said documents being reproduced with said printing apparatus.

A method in accordance with the invention may include the steps of:
a) storing predetermined ones of said electronic job tickets with the program job numbers therefor in said job program file;
b) providing hard copies of said electronic job tickets stored in said job program file;
c) on receipt of a document printing job having the same printing instructions as one of said electronic job tickets stored in said job program file, selecting the job ticket hard copy with the program job number matching said one electronic job ticket;
d) associating said selected job ticket hard copy with the documents that comprise said document printing job;
e) at said second location, scanning said selected job ticket hard copy and the document originals associated therewith to identify said job number and provide pixel representations of the documents associated with said job ticket hard copy;
f) using said job number, retrieving said one electronic job ticket with said printing instructions for said document printing job from said job program file; and
g) producing prints of the documents that comprise said document printing job in accordance with the printing instructions from said one electronic job ticket.

The method may include the steps of:
a) providing a plurality of electronic printing devices at said second location, each of said printing devices having a document scanner for scanning documents and said job ticket hard copy to electronically identify the job number on said job ticket hard copy and provide pixel representations of the documents associated with said job ticket hard copy;
b) providing each of said printing devices with access to said job program file; and
c) placing said document printing job in a selected one of said document scanners for processing of the documents associated with said job ticket hard copy in accordance with the printing instructions from the electronic job ticket corresponding to said job ticket hard copy.

According to another aspect of the present invention, there is provided a method for processing document printing jobs comprising the steps of:
a) at a first location, entering job printing instructions and job identifying numbers for each of said printing jobs in an electronic job program file to provide an electronic job ticket for each printing job;
b) from said job program file, producing a hard copy of a job ticket for each of said printing jobs, each of said job tickets hard copies having the job number encoded thereon in machine readable form;
c) combining each of said job ticket hard copies with the documents that comprise the printing job represented by the job number on the job ticket hard copy;
d) at a second location, scanning said job ticket hard copy and the document originals associated therewith to identify said job number and provide image signals representative of the documents scanned;
e) with said job number, accessing said job program file to obtain the corresponding one of said electronic job tickets; and
f) electronically producing prints of said documents from said image signals in accordance with the job printing instructions from said electronic job tickets.

This method may include the steps of:
a) permanently retaining predetermined ones of said electronic job tickets;
b) providing job ticket hard copies with program job numbers for each of said electronic job tickets;
c) for printing jobs where the printing instructions are the same as the printing instructions in preset ones of said retained electronic job tickets, selecting the job ticket hard copies having the same program job numbers;
d) combining said selected job ticket hard copies with the documents that comprise said printing jobs;
e) at said second location, scanning said job tickets and the document originals associated therewith to identify the job numbers for each of said printing jobs and provide image signals representative of the documents scanned;
f) using said job number, accessing said preset ones of said retained electronic job tickets to obtain the job printing instructions for said printing jobs; and
g) producing prints of said documents from said image signals in accordance with job printing instructions from said preset ones of said electronic job tickets.

According to yet another aspect of the present invention, there is provided a method for processing document printing jobs comprising the steps of:
a) at a first location, preparing printing instructions for carrying out each job together with a job identification number;
b) electronically storing said printing instructions together with the job identification number therefor in a job program file;
c) from said printing instructions, producing a job ticket for each of said jobs, each job ticket having the job identification number for one of said jobs encoded thereon in machine readable form;
d) combining said job tickets with the documents for the job represented by the job identification number to provide stacks of documents with associated job tickets;
e) at a second location, scanning said job tickets and the document originals associated therewith to identify said job numbers and provide pixel representations of the documents for printing;
f) using said job numbers, retrieving the printing instructions for each of said jobs from said job program file; and
g) programming said printing apparatus with the printing instructions retrieved from said job program file whereby to produce prints of said documents in accordance with the job programs retrieved.

According to a still further aspect of the present invention, there is provided a method for processing document printing jobs using a central facility with plural electronic printing machines with document scanners for making prints from image signals, a memory for storing completed job program files ready for printing, said memory providing an blank job ticket identifying the printing process capabilities of said facility for use when programming jobs, comprising the steps of:
a) at a separate location, accessing said memory to electronically display said blank job ticket;
b) using said blank job ticket, programming a job by electronically selecting desired ones of the printing process capabilities identified on said job ticket to provide an electronic job program file for said job;
c) inputting a job identifying number for said job program file;
d) producing a hard copy of said job ticket having at least said job identifying number thereon in machine readable form;
e) combining said job ticket with the documents that comprise said job;
f) at said central facility, loading said documents with said job ticket into the document scanner of a selected one of said printing machines so that said job ticket and the document originals associated therewith are scanned and said job number identified and image signal representative of the documents scanned provided;
g) using said job number, accessing said job program file in said memory to obtain said job printing instructions; and
h) electronically producing prints of said documents from said image signals in accordance with said job printing instructions.

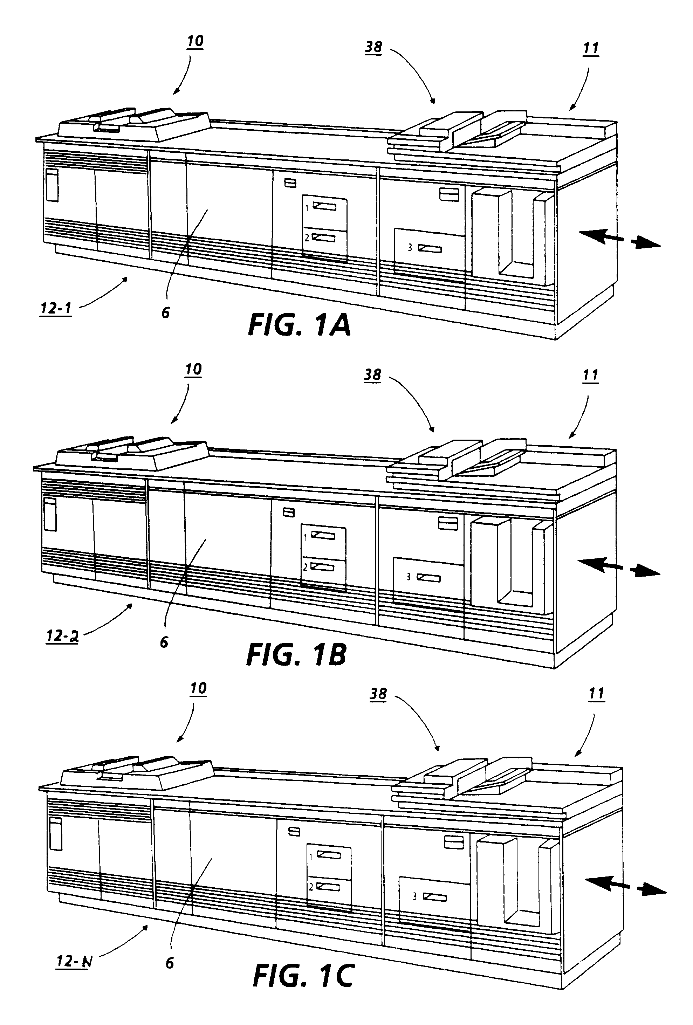

By way of example, a method in accordance with the invention and apparatus for carrying out that method will be described with reference to the accompanying drawings, in which:
Figure 1 is a view depicting a central printing facility with printing machine;
Figure 2 is a plan view illustrating the principal operating components of the printing machines shown in Figure 1;
Figure 3 is a block diagram illustrating the principal elements of an electronic job processing system for use with the machines of Figure 1;
Figure 4 is a view showing an exemplary job ticket displayed on the CRT screen at the job program input station of the system shown in Figure 3; and
Figure 5 is an isometric view showing stacks of document originals arranged for printing, with a job ticket such as shown in Figure 4 assembled with each stack;
Referring to Figure 1, there is shown a central printing facility or job printing site with a plurality of high speed electronic printers 12-1, 12-2,... 12-n for processing print jobs. Printers 12-1, 12-2,... 12-n may be assembled together in a single location such as a room or building to form a closed central production domain or may instead be scattered about within a facility such as an office building or manufacturing hub with individual printers located at various places on a floor and/or on different floors.

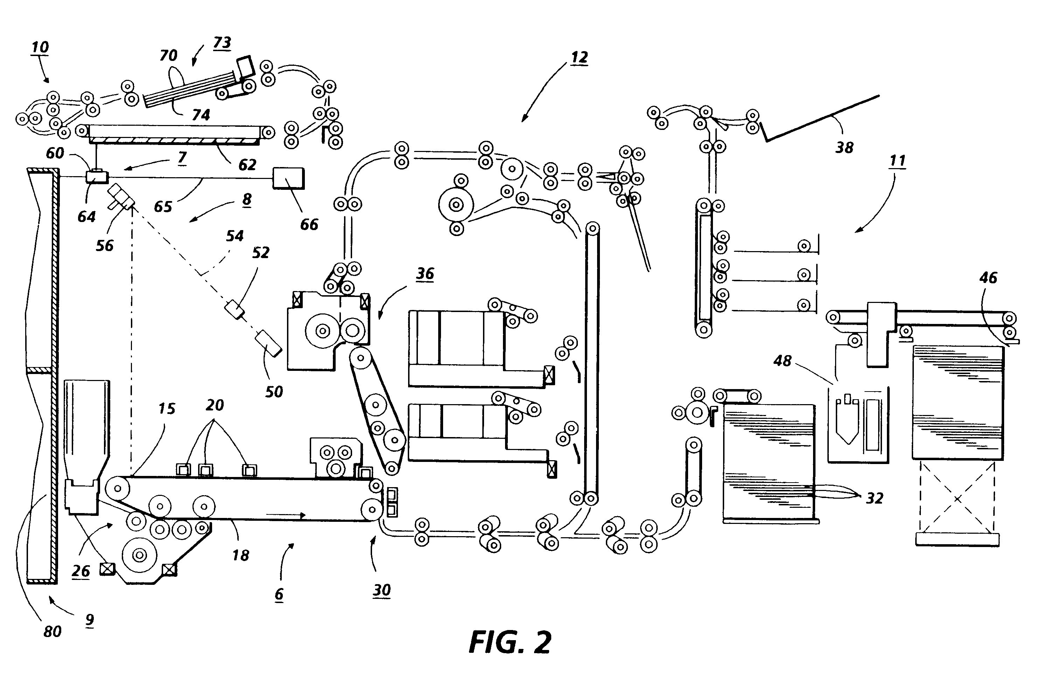

Referring now to Figures 1 and 2, machines 12 are xerographic based printers having a xerographic section 6, document input scanner 7, raster output scanner 8, controller 9, automatic document handler 10, and copy output section 11. While xerographic based printers are described, it will be understood that xerographic type copiers may instead by used. Further, copiers and printers other than xerographic may instead be envisioned.

Xerographic section 6 includes a moving photoreceptor 18 in the form of a belt on which latent electrostatic images of the image being printed are created through selective exposure at an exposure station 15, photoreceptor 18 being previously uniformly charged by corotrons 20 at a charging station. The latent electrostatic image is developed at developing station 26 and transferred at transfer station 30 to a sheet 32 of copy substrate material brought forward in timed registration therewith. The developed image on copy sheet 32 is permanently fixed or fused at fusing station 36 and discharged to output tray 38, or alternately stitched by stitcher 46 or bound by binder 48.

Output scanner 8 has a laser 50 modulated in accordance with the content of an image signal input by acousto-optic modulator 52 to provide imaging beam 54. Beam 54 is scanned across photoreceptor 18 at exposure station 15 by the mirrored facets of a rotating polygon 56 to imagewise expose photoreceptor 18 and create the latent electrostatic images represented by the image signal input to modulator 52.

Input scanner 7 has one or more linear scanning arrays 60 such as charge coupled devices (CCD) mounted below a transparent platen 62 on a reciprocating carriage 64. A carriage drive screw 65 driven by a reversible motor 66 moves carriage 64 in either a forward or reverse scanning direction. A suitable optical system (not shown) is provided to focus array 60 on a line-like segment of platen 62 and the document original 70 resting thereon. Array 60 provides image signals or pixels representative of the image scanned which, after suitable processing, are input to printer memory 80 where the signals are stored pending use. Memory 80, which is in the form of a hard disc, stores machine operating programs and job programs in addition to image signals.

Documents 70 to be printed are supplied in stacks or batches 73 to document tray 74 by the document handler 10 and fed one by one from tray 74 into registered position on platen 62 where the document image is scanned. Following scanning, the document originals are returned to tray 74.

Controller 9 has one or more microprocessors for operating the printers in response to the job programming instructions accompanying with each print job. The various operating components and sections of printers 12 are linked together internally with one another by suitable internal communication channels (not shown).

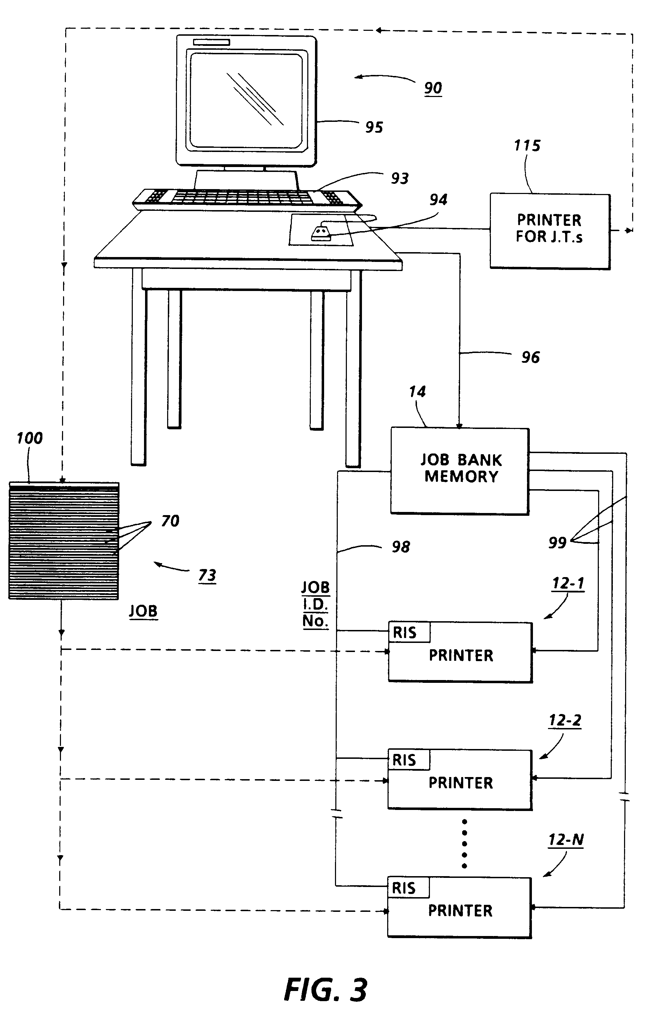

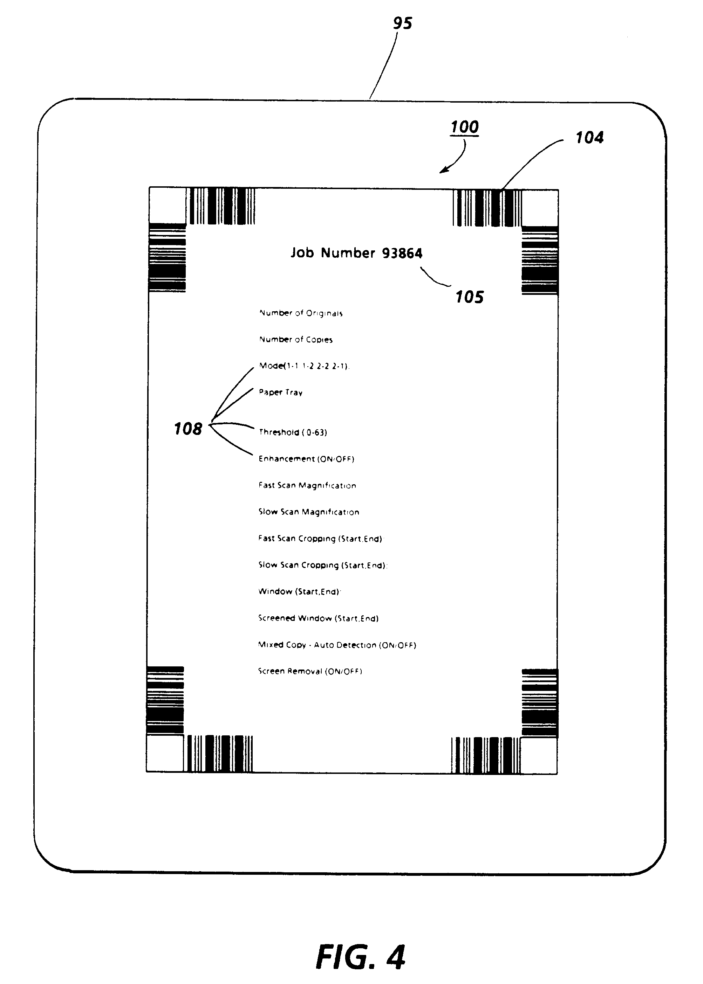

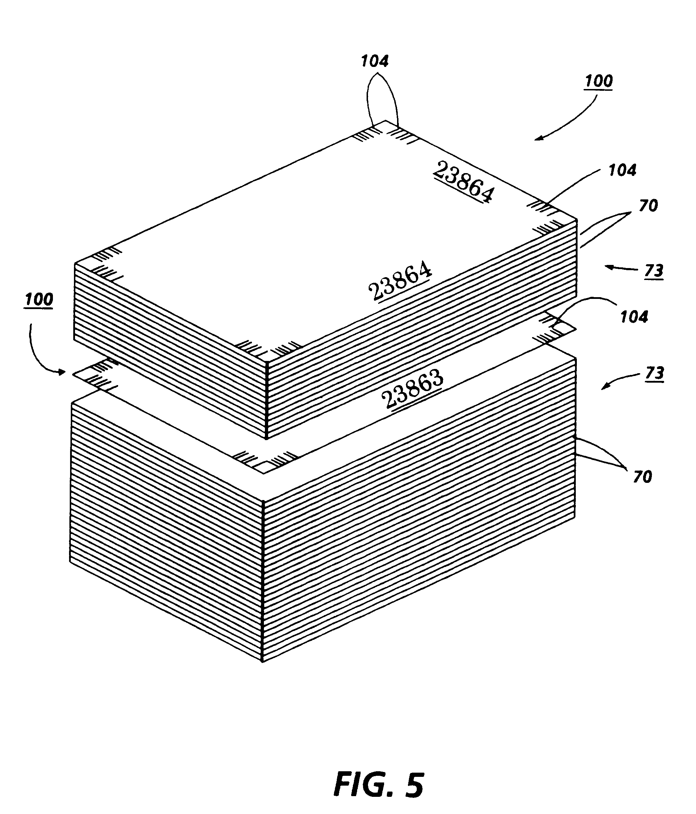

Referring now to Figures 3-5, the electronic job processing system of the present invention includes one or more input stations 90 where print jobs are delivered by customers and users of the system. Each print job to be processed typically comprises a stack 73 of documents 70 which may be as small as one or two documents and as large as hundreds of documents 70 together with the job program desired. The job program normally includes the number of prints to be made, and various other features such as type and color of paper, whether simplex or duplex prints are desired, etc. As will be understood, the job programs are limited by the ability of printers 12-1, 12-2, ... 12-n to comply with the instructions.

Input station 90 has a suitable job programming device shown here as a keyboard 93, mouse 94, and CRT display screen 95 for entering job programs into an electronic job program file. As the job printing selections are entered using keyboard 93 and mouse 94, the selections are displayed on screen 95. When completed, the electronic job program file is input to main job bank or memory 14, memory 14 being electronically coupled to input station 90 by suitable means such as bus 96. Input station 90 may be such as to allow the job owner or customer to program the job instructions himself or the particular job processing facility may employ a specialist, i.e., a job supervisor, for this purpose.

Memory 14 stores an electronic copy of a job ticket 100, with the various job processing options which printers 12-1, 12-2,... 12-n of the printing facility are capable of carrying out. When a job program is to be entered at input station 90, a blank job ticket is called up and displayed on screen 95. Using keyboard 93 and mouse 94 in a conventional manner, the desired job options shown on the job ticket displayed on screen 95 are electronically filled in, either by the job supervisor from instructions provided by the customer or by the customer himself. A job identification number 105 for the particular job is also entered and coded at 104.

Once the job program is completed, a hard copy of the completed job ticket 100 bearing the job identification number is printed out for assembly with the batch 73 of documents 70 that comprise the job while the electronic job ticket having the job program is sent to the job program file in memory 14 for retention pending completion of the job. Job tickets 100 may be conveniently printed by a small convenience copier or printer 115 at input station 90. As a result, for each job there is provided a batch 73 of documents 70 to be printed, a numbered job program in memory 14 having printing instructions for the job, and a copy of the job ticket 100 bearing the job identification number 105 of the job in coded format for assembly with the batch of documents.

It will be understood that instead of printing a full copy of the job ticket showing the various job program selections made, a copy of a blank job ticket having only the job identification number in coded form may instead be printed out.

Following completion of the job programming phase, each batch of documents with its associated job ticket 100 is physically transferred to the job printing site which as discussed may be a printer in a central production domain or an individual printer located at some point in the facility. The document batch with job ticket 100 in place is loaded into the document tray 74 of the automatic document handler 10 of the printer 12-1, 12-2, ..., or 12-n selected to process the job. During printing, the job ticket 100 accompanying the batch of documents 70 is scanned by array 60 of input scanner 7 along with the documents 70 and the job identification number 105 obtained. Using the job identification number, the job program stored in memory 14 for that job number is addressed via bus 98 and transmitted via bus 99 to the printer originating the request, that is, the printer selected to carry out the job. The job printing instructions obtained program the printer which in turn processes the documents 70 and prints the job.

On completion of the job, the job program is cleared from memory 14 in order to make room for future job programs. The job programs for frequently used jobs may however be stored in memory 14 on a permanent or semi-permanent basis to avoid the need to reprogram each time the same job is requested. In that event, a supply of job tickets 100 bearing the job identification numbers for the stored job programs may be printed out beforehand. When a job matching one of the job programs stored in memory 14 is received, the job ticket 100 having the job identification number for that specific job program is selected from the supply of job tickets and assembled with the batch of documents that comprise the job. On delivery of the documents with job ticket to the printer selected, the job identification number of the job ticket accesses the stored job program in memory 14 to program the printer and carry out the job in the manner described previously.

The job parameters available in the job program files stored in memory 14 are preferably displayed on the face of the pre-printed job tickets to facilitate job program selection and enable the particular job parameters associated with each numbered job ticket to be identified.

Job tickets 100 could also provide check-off boxes or the like to enable the customer to check off the job parameters desired. These could also be later used as a check to determine if the finished print job complied with the customer's instructions.

Input station 90 may be coupled directly with some or all of the job customers, allowing the customers to enter the job program and obtain a printout of the job ticket from the customers' own site or office. In that event, the customer would create the job program file with the job program and job identification number, provide a copy of the job ticket, and deliver the stack of documents together with the job ticket to the job printing site. For job program files stored permanently in memory 14, the customer would provide the job ticket with the appropriate job identification number.

## Claims

1. A method for processing document reproducing jobs, including preparing instructions (100) in the form of a hard copy for a document reproducing job, said instructions including a job identification (105) where said job identification is encoded in machine readable form, combining said hard copy with the documents (70) that comprise said document reproducing job; scanning said hard copy to identify the job using said job identification, accessing said instructions in electronic form for said document reproducing job, and reproducing said documents in accordance with the accessed instructions, characterised in that said method utilises a printing system of the type including an input station (90) disposed at a first location and at least one printing apparatus (12) disposed at a second location wherein both the input station (90) and the printing apparatus (12) communicate with a memory (14), whereby said instructions are prepared in electronic form with the input station (90) and stored in electronic form in the memory (14), the hard copy being produced from said instructions with said input station (90) , said hard copy being scanned with said printing apparatus (12) to identify the job, said instructions being accessed in electronic form from the memory (14) and said documents being reproduced with said printing apparatus (12).

2. A method according to claim 1, including the steps of:
a) storing predetermined instructions in electronic form;
b) producing at least one hard copy from said stored instructions;
c) on receipt of a document reproducing job, selecting a previously-produced hard copy;
d) combining said selected hard copy with the documents that comprise said document reproducing job;
e) at said second location, scanning said selected hard copy to identify said job;
f) using said identification, accessing said predetermined instructions in electronic form; and
g) reproducing said documents in accordance with the accessed instructions.

3. A method according to claim 2, including the step of retaining the predetermined instructions in storage after the documents have been reproduced.

4. A method according to any one of the preceding claims for processing document printing jobs, including the steps of:
a) providing a plurality of electronic printing devices at said second location, each of said printing devices having a document scanner for scanning said documents and said hard copy to provide image signals representative of the documents and to identify the job;
b) providing each of said printing devices with access to said instructions in electronic form; and
c) placing said document printing job in a selected one of said document scanners for printing of the documents in accordance with the accessed instructions.

5. A method according to any one of the preceding claims, in which the hard copy comprises a job ticket including a job number as the said identification, the job ticket also including some at least of the said instructions.

6. A method according to claim 5, in which said memory (14) is provided for storing the said instructions in electronic form and for providing, in electronic form, blank job tickets identifying the reproduction capabilities available, wherein the step of preparing instructions for storage in the memory comprises selecting desired ones of the reproduction capabilities on a blank job ticket.

7. A method in accordance with any one of the claims 1 to 3, in which the accessed instructions are used for controlling the operation of document reproducing apparatus.

8. A method according to claim 1, in which said printing system includes a plurality of input stations (90) and said method includes the steps of:
(a) preparing with said input stations (90) electronic job tickets (100) with printing instructions for individual document printing jobs, each of said job tickets (100) including a respective job identification (105);
(b) entering the prepared electronic job tickets (100) into said memory (14);
(c) producing hard copies of the prepared electronic job tickets (100) at said input stations (90) with the job identification (105) for each job ticket (100) encoded thereon in machine readable form;
(d) at said input stations (90), combining said prepared job ticket hard copies with the documents that comprise the document printing job represented by the job identification (105) on the job ticket (100) to provide said document printing jobs;
(e) delivering said document printing jobs to a central printing facility comprising said at least one printing apparatus (12);
(f) at said central printing facility (12), scanning said document printing jobs to obtain the job identification (105) for the jobs from said job ticket hard copies and provide pixel representations of the documents;
(g) using the obtained job identifications (105), retrieving the electronic job ticket (100) with the printing instructions for each of said document printing jobs from said memory (14); and
(h) producing prints of the documents that comprise said document printing jobs in accordance with the printing instructions retrieved from said memory (14).

9. Apparatus for processing document reproducing jobs, including means for preparing instructions (100) in the form of a hard copy for a document reproducing job, said instructions including a job identification (105) where said job identification is encoded in machine readable form, scanning means (7) for scanning said hard copy to identify the job using said job identification, access means for accessing said instructions in electronic form for said document reproducing job, and reproducing means for reproducing said documents in accordance with the accessed instructions, characterised in that said apparatus includes a printing system of the type including an input station (90) disposed at a first location and at least one printing apparatus (12) disposed at a second location, both the input station (90) and the printing apparatus (12) being coupled to a memory (14) thereby enabling said instructions to be prepared in electronic form with the input station (90) and stored in electronic form in the memory (14), the hard copy being produced from said instructions with said input station (90), said hard copy being scanned with said printing apparatus (12) to identify the job said instructions being accessed in electronic form from the memory (14) and said documents being reproduced with said printing apparatus (12).

10. Apparatus according to claim 9, in which the document reproducing machines are located at a central facility and the accessing means is in a separate location.

## Patentansprüche

1. Verfahren zum Bearbeiten von Dokumentreproduzierungs-Aufträgen, das einschließt Vorbereiten von Anweisungen (100) in Form einer Papierkopie für einen Dokumentreproduzierungs-Auftrag, wobei die Anweisungen eine Auftrags-Identifizierung (105) enthalten, welche Auftrags-Identifizierung in maschinenlesbarer Form kodiert ist, Kombinieren der Papierkopie mit den Dokumenten (70), welche den Dokumentreproduzierungs-Auftrag umfassen; Abtasten der Papierkopie zum Identifizieren des die Auftrags-Identifizierung benutzenden Auftrags, Zugriff zu den Anweisungen in Elektronikform für den Dokumentenreproduzierungs-Auftrag, und Wiedergeben der Dokumente entsprechend den Instruktionen, auf die zugegriffen wurde, dadurch gekennzeichnet, daß das Verfahren ein Drucksytem des Typs benutzt, der eine an einer ersten Stelle angeordnete Eingabestation (90) und mindestens eine an einer zweiten Stelle angeordnete Druckvorrichtung (12) enthält, wobei sowohl die Eingabestation (90) wie auch die Druckvorrichtung (12) mit einem Speicher (14) in Verbindung steht, wodurch die Anweisungen in Elektronikform mit der Eingabestation (90) vorbereitet und in Elektronikform in dem Speicher (14) gespeichert werden, die Papierkopie von den Anweisungen mit der Eingabestation (90) erzeugt wird, die Papierkopie bei der Druckvorrichtung (12) zum Identifizieren des Auftrags abgetastet wird, auf die Instruktionen in Elektronikform von dem Speicher (14) zugegriffen wird und die Dokumente mit Hilfe der Druckvorrichtung (12) reproduziert werden.

2. Verfahren nach Anspruch 2, mit den Schritten:
a) vorbestimmte Anweisungen werden in Elektronikform gespeichert;
b) von den gespeicherten Anweisungen wird mindestens eine Papierkopie erzeugt;
c) beim Erhalten eines Dokumentenreproduzierungs-Auftrags wird eine vorher erzeugte Papierkopie ausgewählt;
d) die ausgewählte Papierkopie wird mit den Dokumenten kombiniert, welche den Dokumenten-Wiedergabe-Auftrag umfassen;
e) an der zweiten Stelle wird die ausgewählte Papierkopie zum Identifizieren des Auftrags abgetastet;
f) unter Benutzung der Identifizierung wird auf die vorbestimmten Anweisungen in Elektronikform zugegriffen; und
g) die Dokumente werden entsprechend den Anweisungen reproduziert, auf die zugegriffen wurde.

3. Verfahren nach Anspruch 2, mit dem Schritt, daß die vorbestimmten Anweisungen im Speicher zurückgehalten werden, nachdem die Dokumente reproduziert wurden.

4. Verfahren nach einem der vorangehenden Ansprüche zum Bearbeiten von Dokument-Druckaufträgen, welches die Schritte enthält:
a) es wird eine Vielzahl von elektronischen Druckgeräten an der zweiten Stelle vorgesehen, wobei jedes Druckgerät einen Dokumenten-Abtaster zum Abtasten der Dokumente und der Papierkopie besitzt, um für die Dokumente repräsentative Bildsignale zu schaffen und um den Auftrag zu identifizieren;
b) für jedes Druckgerät wird Zugriff zu den Anweisungen in Elektronikform geschaffen; und
c) der Dokument-Druckauftrag wird einem ausgewählten Dokument-Abtaster zum Drucken der Dokumente entsprechend den Anweisungen eingegeben, auf die zugegriffen wurde.

5. Verfahren nach einem der vorangehenden Ansprüche, bei dem die Papierkopie umfaßt eine Auftragskarte einschließlich einer Auftragsnummer als der genannten Identifizierung, wobei die Auftragskarte auch mindestens einige von den Anweisungen enthält.

6. Verfahren nach Anspruch 5, bei dem der Speicher (14) vorgesehen ist zum Speichern der Anweisungen in Elektronikform und um in Elektronikform Auftragskartenformulare zu schaffen, welche die verfügbaren Wiedergabe-Möglichkeiten identifizieren, wobei das Vorbereiten von Anweisungen zum Speichern in dem Speicher das Auswählen von gewünschten Wiedergabefähigkeiten an einem Auftragskartenformular umfaßt.

7. Verfahren nach einem der Ansprüche 1 bis 3, bei dem die Instruktionen, auf die zugegriffen wird, zum Steuern des Betriebs der Dokumentreproduzier-Vorrichtung benutzt werden.

8. Verfahren nach Anspruch 1, bei dem das Drucksystem eine Vielzahl von Eingabestationen (90) umfaßt und das Verfahren die Schritte enthält:
a) mit der Eingabestation (90) werden elektronische Auftragskarten (100) mit Druckanweisungen für einzelne Dokument-Druckaufträge vorbereitet, wobei jede Auftragskarte (100) eine jeweilige Auftrags-Identifizierung (105) enthält;
b) die vorbereiteten elektronischen Auftragskarten (104) werden in den Speicher (14) eingegeben;
c) Papierkopien der vorbereiteten elektronischen Auftragskarten (100) mit der daran in maschinenlesbarer Form kodierter Auftrags-Identifizierung (105) für jede Auftragskarte (100) werden an den Eingabestationen (90) erzeugt;
d) die vorbereiteten Auftragskarten-Papierkopien werden an den Eingabestationen (90) mit den Dokumenten kombiniert, welche den durch die Auftrags-Identifizierung (105) an der Auftragskarte (100) repräsentierten Dokument-Druckauftrag umfassen, um die Dokumenten-Druckaufträge zu schaffen;
e) die Dokumenten-Druckaufträge werden zu einer zentralen Druckanlage geliefert, welche mindestens eine Druckvorrichtung (12) umfaßt;
f) an der zentralen Druckanlage (12) werden die Dokumenten-Druckaufträge abgetastet, um die Auftrags-Identifizierung (105) für die Aufträge von den Auftragskarten-Papierkopien zu erhalten und Pixel-Darstellungen der Dokumente zu schaffen;
g) unter Benutzung der erhaltenen Auftrags-Identifizierung (105) wird die elektronische Auftragskarte (100) mit den Druckanweisungen für jeden Dokumenten-Druckauftrag von dem Speicher (14) abgerufen; und
h) Drucke von den Dokumenten, welche die Dokumenten-Druckaufträge umfassen, werden entsprechend den von dem Speicher (14) abgerufenen Druckanweisungen erzeugt.

9. Vorrichtung zum Bearbeiten von Dokumentenreproduzierungs-Aufträgen, welche enthält Mittel zum Herstellen von Anweisungen (100) in Form einer Papierkopie für einen Dokumentenreproduzierungs-Auftrag, wobei die Anweisungen eine Auftrags-Identifizierung (105) einschließen, bei der die Auftrags-Identifizierung in maschinenlesbarer Form kodiert ist, Abtastmittel (7) zum Abtasten der Papierkopie zum Identifizieren des Auftrags unter Benutzung der Auftrags-Identifizierung, Zugriffsmittel zum Zugreifen auf die Anweisungen in Elektronikform für den Dokumentenwiedergabe-Auftrag und Wiedergabemittel zum Wiedergeben der Dokumente entsprechend den Anweisungen, auf die zugegriffen wurde, dadurch gekennzeichnet, daß die Vorrichtung enthält ein Drucksystem des Typs, der eine Eingabestation (90) enthält, die an einem ersten Platz angeordnet ist, und mindestens eine Druckvorrichtung (12), die an einem zweiten Platz angeordnet ist, wobei sowohl die Eingabestation (90) wie auch die Druckvorrichtung (12) mit einem Speicher (14) gekoppelt sind, wodurch es möglich ist, die Anweisungen in Elektronikform mit der Eingabestation (10) vorzubereiten und in Elektronikform in dem Speicher (14) zu speichern, wobei die Papierkopie aus den Anweisungen mit der Eingabestation (90) erzeugt wird, die Papierkopie mit der Druckvorrichtung (12) abgetastet wird, um den Auftrag zu identifizieren, auf die Anweisungen in Elektronikform von dem Speicher (14) zugegriffen wird und die Dokumente mit der Druckvorrichtung (12) reproduziert werden.

10. Vorrichtung nach Anspruch 9, bei der die Dokumenten-Wiedergabemaschinen in einer zentralen Anlage angeordnet sind und die Zugriffsmittel sich an einer separaten Stelle befinden.

## Revendications

1. Procédé pour traiter des travaux de reproduction de documents, comprenant la préparation d'instructions (100) sous la forme d'une copie sur support en papier pour un travail de reproduction de documents, lesdites instructions comportant une identification du travail (105) où ladite identification du travail est codée sous forme lisible par machine, la combinaison de ladite copie sur support en papier avec les documents (70) qui comprennent ledit travail de reproduction des documents; le balayage de ladite copie sur support en papier afin d'identifier le travail en utilisant ladite identification de travail, l'accès auxdites instructions sous forme électronique pour ledit travail de reproduction des documents, et la reproduction desdits documents en conformité avec les instructions accédées, caractérisé en ce que ledit procédé utilise un système d'impression du type comprenant un poste d'entrée (90) disposé à un premier emplacement et au moins un appareil d'impression (12) situé à un second emplacement où le poste d'entrée (90) ainsi que l'appareil d'impression (12) communiquent avec une mémoire (14), d'où il résulte que lesdites instructions sont préparées sous forme électronique avec le poste d'entrée (90) et stockées sous forme électronique dans la mémoire (14), la copie sur support en papier étant produite à partir desdites instructions avec ledit poste d'entrée (90), ladite copie sur support en papier étant balayée avec ledit appareil d'impression (12) de manière à identifier le travail, lesdites instructions étant accédées sous forme électronique par la mémoire (14) et lesdits documents étant reproduits avec ledit appareil d'impression (12).

2. Procédé selon selon la revendication 1, comprenant les étapes consistant à :
a) stocker des instructions prédéterminées sous forme électronique;
b) produire au moins une copie sur support en papier à partir desdites instructions stockées;
c) lors de la réception d'un travail de reproduction de documents, sélectionner une copie sur support en papier produite antérieurement;
d) combiner ladite copie sélectionnée sur support en papier avec les documents qui comprennent ledit travail de reproduction de documents;
e) audit second emplacement, balayer ladite copie sélectionnée sur support en papier afin d'identifier ledit travail;
f) en utilisant ladite identification, accéder auxdites instructions prédéterminées sous forme électronique; et
g) reproduire ledits documents en conformité avec les instructions accédées.

3. Procédé selon la revendication 2, comprenant l'étape consistant à maintenir les instructions prédéterminées en stockage après que les documents ont été reproduits.

4. Procédé selon l'une quelconque des revendications précédentes pour traiter des travaux d'impression de documents, comprenant les étapes consistant à :
a) fournir une multitude de dispositifs d'impression électronique audit second emplacement, chacun desdits dispositifs d'impression comportant un dispositif de balayage des documents afin de balayer lesdits documents et ladite copie sur support en papier pour fournir des signaux d'image représentatifs des documents et pour identifier le travail;
b) fournir à chacun desdits dispositifs d'impression l'accès auxdites instructions sous forme électronique; et
c) placer ledit travail d'impression de document dans un dispositif de balayage sélectionné parmi lesdits dispositifs de balayage des documents afin d'imprimer les documents en conformité avec les instructions accédées.

5. Procédé selon l'une quelconque des revendications précédentes, dans lequel la copie sur support en papier comprend un ticket de travail comportant un numéro de travail comme ladite identification, le ticket de travail comprenant aussi au moins certaines desdites instructions.

6. Procédé selon la revendication 5, dans lequel ladite mémoire (14) est prévue pour stocker lesdites instructions sous forme électronique et pour fournir, sous forme électronique, des tickets vierges de travaux identifiant les possibilités de reproduction dont on dispose, où l'étape consistant à préparer des instructions pour stockage dans la mémoire comprend la sélection des possibilités désirées parmi les possibilités de reproduction sur un ticket vierge de travail.

7. Procédé selon l'une quelconque des revendications 1 à 3, dans lequel les instructions accédées sont utilisées pour commander le fonctionnement de l'appareil de reproduction des documents.

8. Procédé selon la revendication 1, dans lequel ledit système d'impression comporte une multitude de postes d'entrée (90) et ledit procédé comprend les étapes consistant à :
(a) préparer auxdits postes d'entrée (90) des tickets électroniques de travaux (100) avec des instructions d'impression pour des travaux individuels d'impression de documents, chacun desdits tickets de travaux (100) comprenant une identification respective d'un travail (105);
(b) entrer les tickets électroniques de travaux préparés (100) dans ladite mémoire (14);
(c) produire des copies sur support en papier des tickets électroniques de travaux préparés (100) auxdits postes d'entrée (90) avec l'identification du travail (105) pour chaque ticket de travail (100) codé sur son dessus sous forme lisible par machine;
(d) auxdits postes d'entrée (90), combiner lesdites copies sur support en papier des tickets de travaux préparés avec les documents qui comprennent le travail d'impression de document représenté par l'identification du travail (105) sur le ticket de travail (100) pour fournir lesdits travaux d'impression des documents;
(e) délivrer lesdits travaux d'impression des documents à une installation centrale d'impression comprenant ledit au moins un appareil d'impression (12);
(f) à ladite installation centrale d'impression (12), balayer lesdits travaux d'impression des documents afin d'obtenir l'identification du travail (105) pour les travaux à partir desdites copies sur support en papier de tickets de travaux et fournir des représentations par pixels des documents;
(g) en utilisant les identifications obtenues des travaux (105), extraire de ladite mémoire (14) le ticket électronique de travail (100) avec les instructions d'impression pour chacun desdits travaux d'impression de documents; et
(h) produire des impressions des documents qui comprennent lesdits travaux d'impression de documents en conformité avec les instructions d'impression extraites de ladite mémoire (14).

9. Appareil pour traiter des travaux de reproduction de documents, comprenant un moyen pour préparer des instructions (100) sous la forme d'une copie sur support en papier pour un travail de reproduction de documents, lesdites instructions comportant une identification du travail (105) où ladite identification du travail est codée sous forme lisible par machine, un moyen de balayage (7) pour balayer ladite copie sur support en papier afin d'identifier le travail en utilisant ladite identification du travail, un moyen d'accès pour accéder auxdites instructions sous forme électronique pour ledit travail de reproduction de documents, et un moyen de reproduction afin de reproduire lesdits documents en conformité avec les instructions accédées, caractérisé en ce que ledit appareil comprend un système d'impression du type comportant un poste d'entrée (90) disposé à un premier emplacement et au moins un appareil d'impression (12) placé à un second emplacement, le poste d'entrée (90) ainsi que l'appareil d'impression (12) étant accouplés à une mémoire (14), ce qui permet aux instructions d'être préparées sous forme électronique avec le poste d'entrée (90) et stockées sous forme électronique dans la mémoire (14), la copie sur support en papier étant produite à partir desdites instructions avec ledit poste d'entrée (90), ladite copie sur support en papier étant balayée avec ledit appareil d'impression (12) de manière à identifier le travail, lesdites instructions étant accédées sous forme électronique à partir de la mémoire (14) et lesdits documents étant reproduits avec ledit appareil d'impression (12).

10. Appareil selon selon la revendication 9, dans lequel les machines de reproduction de documents sont situées à une installation centrale et le moyen d'accession se trouve dans un lieu séparé.
